# EUROPÄISCHE PATENTANMELDUNG

(11) **EP 1 266 774 A2**
(43) Veröffentlichungstag der Anmeldung: **18.12.2002**
(21) Anmeldenummer: 02012588.6
(22) Anmeldetag: 06.06.2002
(51) Int. Cl.: B60G 15/07, F16C 33/76, F16C 19/16, F16F 1/12

(54) **Federbeinlagerung**

(30) Priorität: 11.06.2001 DE 10128223
(71) Anmelder: INA-Schaeffler KG, 91074 Herzogenaurach (DE)
(72) Erfinder: Zernickel, Alexander, 91074 Herzogenaurach (DE); Erhardt, Herbert, 91074 Herzogenaurach (DE); Grau, Ulrich, Dr., 91448 Emskirchen (DE); Meyer, Gerhard, 91611 Lehrberg (DE)

(57) **Zusammenfassung**

Die Erfindung betrifft eine Stützlagerung (1) für ein Federbein (19), umfassend zwei Trägerelemente (7, 9), zwischen denen ein Wälzlager (2) eingesetzt ist. Die Wälzkörper (6) des Wälzlagers (2) sind dabei ausschließlich in einer von der Schraubendruckfeder (8) kraftbeaufschlagten Zone des Wälzlagers (2) angeordnet.

## Beschreibung

### Gebiet der Erfindung

Die Erfindung betrifft eine karosserieseitige Stützlagerung für ein Federbein oder einen Federdämpfer eines Kraftfahrzeuges. Die Federbeinlagerung bzw. die karosserieseitige Stützlagerung umfasst zwei Trägerelemente, zwischen denen ein Wälzlager lagefixiert angeordnet ist. Ein erstes Trägerelement ist dabei mit der Fahrzeugkarosserie verbunden und das zweite Trägerelement einer Schraubendruckfeder zugeordnet, die im eingebauten Zustand einen Stoßdämpfer bzw. einen Federdämpfer umschließt.

### Hintergrund der Erfindung

Karosserieseitige Stützlager werden in heutigen Fahrzeugen insbesondere in Verbindung mit sogenannten McPherson-Federbeinen eingesetzt, für gelenkte Fahrzeugräder, insbesondere gelenkte Vorderräder. Das Federbein verbindet einen Radträger, der ein Gehäuse bildet, in dem die Radnabe drehbar gelagert ist, über eine Dämpfer-Kolbenstange mit der Karosserie. Dabei ist das karosserieseitige Ende der Dämpfer-Kolbenstange über eine Stützlagerung mit der Karosserie verbunden. Diese Anlenkung ermöglicht bzw. vereinfacht eine erforderliche Verdrehung des Federbeins relativ zu der Karosserie bei Lenkbewegungen der Räder und bei gleichzeitiger Lastübertragung, die beispielsweise bei einer Kurvenfahrt des Fahrzeugs entsteht.

Bekannte karosserieseitige Stützlagerungen umfassen Axial-Rillenkugellager, die mittels einer Pressverbindung in den zugehörigen Trägerteilen eingesetzt sind bzw. mit denen verbunden sind, wie beispielsweise der US-A 4,248,454 zu entnehmen ist.

Das Dokument DE 690 01 377 T2 zeigt eine Stützlagerung, deren Lagerringe jeweils in einem aus Kunststoff hergestellten Halteelement eingebettet sind. Beiden Halteelementen gemeinsam ist die zentrierte Anordnung in zueinander beabstandet angeordneten, aus Stahl hergestellten Trägerteilen.

Diese bekannten karosserieseitigen Stützlagerungen umfassen übereinstimmend symmetrisch angeordnete Wälzkörper zwischen den Lagerringen, obwohl die Schraubendruckfeder eine unsymmetrische Krafteinleitung in die Wälzlagerung ausübt. Auf den Umfang des Wälzlagers übertragen bildet ein Abstützbereich des Federendes der Schraubendruckfeder eine Kraftspitze. Außerdem stellen sich Zonen mit einer geringen Krafteinleitung ein. Folglich bilden sich bei einer Verwendung eines regulär aufgebauten Wälzlagers Zonen, deren Wälzkörper hohen Belastungen ausgesetzt sind im Vergleich zu Zonen, in denen die Wälzkörper nahezu belastungsfrei sind.

### Zusammenfassung der Erfindung

Der vorliegenden Erfindung liegt die Aufgabe zu Grunde eine funktionsoptimierte Stützlagerung zu schaffen, die an eine Krafteinleitung bzw. an ein Kraftprofil der eingesetzten Schraubendruckfeder angepasst ist und die einbauspezifische Bedürfnisse berücksichtigt sowie eine Kosten- und Gewichtsreduzierung ermöglicht.

Diese Problemstellung wird erfindungsgemäß durch eine Wälzlagerung gelöst, deren Wälzkörper an die in das Wälzlager bzw. in die Stützlagerung eingeleitete Kraft der Schraubendruckfeder angepasst in den Wälzlagerkäfig eingesetzt sind. Dazu ist eine vorzugsweise lageorientiert in die Stützlagerung eingesetzte Wälzlagerung vorgesehen, deren Wälzkörper entsprechend dem qualitativen Kraftprofil der verwendeten Schraubendruckfeder in dem Wälzlagerkäfig angeordnet sind. Diese Maßnahme ermöglicht eine kosten- und bauteiloptimierte Auslegung der Wälzlagerung unter Berücksichtigung der auftretenden Belastungen und zur Erzielung einer geforderten Lebensdauer. Die an das Kraftprofil der Schraubendruckfeder angepasste lokale Anordnung der Wälzkörper hinsichtlich Lage und Anzahl, vermeidet eine Überdimensionierung der Wälzlagerung. Der erforderliche gerichtete, lageorientierte Einbau des Wälzlagerkäfigs sieht dabei Zonen mit in allen Taschen des Wälzlagerkäfig eingesetzten Wälzkörpern vor sowie Zonen ohne Wälzkörper, entsprechend dem von der Schraubendruckfeder in die Wälzlagerung eingeleiteten Kraftprofil. Die Erfindung realisiert eine Federbeinlagerung mit einem auf die Einbausituation optimal ausgelegten Wälzlager. Durch den Wegfall einzelner Wälzkörper ergibt sich eine Kostenreduktion und ein Gewichtsvorteil der eingesetzten Wälzlagerung. Die erfindungsgemäße Maßnahme kann sowohl mit einem Serien-Wälzlagerkäfig als auch mit einem speziell hergestellten Wälzlagerkäfig erzielt werden.

Weitere vorteilhafte Ausgestaltungen der Erfindung sind Gegenstand der abhängigen Ansprüche 2 bis 12. Zur Erzielung einer genauen Zuordnung der Wälzkörper an die Bereiche bzw. Zonen des Kraftprofils der Schraubendruckfeder ist ein Wälzlagerkäfig vorgesehen, der eine exakte Zuordnung sicherstellt. Eine dauerhafte lageorientierte Einbaulage des Käfigs wird erreicht, indem dieser gegenüber einem Trägerelement begrenzt verdrehbar angeordnet ist.

Der lageorientierte Einbau der Wälzlagerung in der karosserieseitigen Stützlagerung ermöglicht die Anordnung der Wälzkörper, die übereinstimmt mit einem Abstützbereich eines Federendes der Schraubendruckfeder. Weitere Wälzkörper der Wälzlagerung sind in den Zonen im Wälzlagerkäfig eingesetzt, die mittels einer rechnerischen Voroptimierung, einer Festigkeitsbewertung bzw. durch Anwendung der finiten Elementemethode (FEM) bestimmt sind. Dabei kann sich eine Wälzkörperanordnung einstellen, die sowohl in unterschiedlicher Anzahl als auch in voneinander abweichenden Winkelabschnitten in dem Wälzkörperkäfig eingesetzt sind. Erfindungsgemäß kann ein Wälzlagerkäfig mit gleichmäßig rotationssymmetrisch angeordneten Wälzkörpern eingesetzt werden, die von Zonen ohne Wälzkörper unterbrochen sind. Alternativ schließt die Erfindung Wälzlagerkäfige ein, deren Wälzkörper unsymmetrisch angeordnet sind.

Die kostenoptimierte erfindungsgemäße Stützlagerung schließt weiterhin die Verwendung von Lagerringen ein, die aus einem Draht hergestellt sind und eine mittels Umformen gestaltete Wälzkörperlaufbahn aufweisen. Die Enden des Drahtes sind unlösbar miteinander verbunden, wobei die Verbindungsstelle im eingebauten Zustand in einer lastfreien Zone des Wälzlagers angeordnet ist die von den Wälzkörpern nicht überrollt wird.

Zur Kostenoptimierung schließt die Erfindung als Alternative zu einem geschlossenen Wälzlagerring Laufbahnabschnitte ein, die ausschließlich im Bereich der Wälzkörperanordnungen vorgesehen sind. Die kreisbogenartig gestalteten Laufbahnabschnitte sind dabei in den jeweiligen Trägerelementen sowohl lagefixiert als auch verliergesichert angeordnet. Diese gewichtsoptimierte wie auch kostenoptimierte Maßnahme ist insbesondere geeignet zur Verwendung von aus einem Draht hergestellten Laufbahnabschnitten.

In vorteilhafter Weise erstreckt sich die Erfindung weiterhin auf die Trägerelemente der karosserieseitigen Stützlagerung. Diese vorzugsweise aus Stahlblech oder alternativ aus Kunststoff hergestellten Trägerelemente sind erfindungsgemäß so gestaltet, dass diese abweichend von einer bislang verwendeten rotationssymmetrischen Gestaltung ebenfalls an die von der Schraubendruckfeder in die Stützlagerung eingeleitete Kraft angepasst ist. Beispielsweise eignet sich dazu ein Trägerelement, das gezielt im Bereich der größten Krafteinleitung verstärkt ist. Lastfreie Zonen sind dagegen schwächer gestaltet, was den Einbauraum der Trägerelemente verringert.

Für die heute in Großserien hergestellten Kraftfahrzeuge bietet das funktionsoptimierte erfindungsgemäße Stützlager einen entscheidenden Kostenvorteil. Durch Schaffung einer vorkomplettierbaren Einheit der erfindungsgemäßen Wälzlagerung wird dieser Vorteil verstärkt, da eine derartige Lagerung eine automatisierte Montage der gesamten Stützlagerung ermöglicht.

Weiterhin schließt die Erfindung eine Sicherung beider Trägerelemente nach Einbau der Wälzlagerung ein. Damit ist eine vormontierbare Einheit der gesamten Stützlagerung geschaffen.

In weiterer vorteilhafter Ausgestaltung der Erfindung ist vorgesehen, die Trägerelemente so zu gestalten, dass diese eine Montage von Wälzlagerungen mit unterschiedlichen Tragzahlen ermöglichen. Diese Maßnahme ermöglicht die Verwendung von einer größeren Anzahl von Gleichteilen, so dass beispielsweise bei Fahrzeugen einer Kategorie, die jedoch für unterschiedliche Einsätze ausgelegt werden und damit Schraubendruckfedern mit voneinander abweichenden Federkennlinien bzw. Kraftprofilen aufweisen, der Fahrzeughersteller eine Adaption mittels einer geänderten Wälzlagerung vornehmen kann.

### Kurze Beschreibung der Zeichnungen

Anhand von Ausführungsbeispielen, die in fünf Figuren dargestellt sind, wird die Erfindung näher erläutert. Es zeigen:
- Figur 1: in einer Perspektive den Aufbau der erfindungsgemäßen Stützlagerung;
- Figur 2: die Abstützung einer Schraubendruckfeder an einem Trägerelement der Stützlagerung;
- Figur 3: in einer Perspektive ein Trägerelement mit einem zugehörigen Wälzlagerring und Wälzlagerkäfig;
- Figur 4: eine räumliche Darstellung der von der Schraubendruckfeder ausgeübten Kraft auf das Trägerelement bzw. die Wälzlagerung;
- Figur 5: in einem Halbschnitt die Stützlagerung im eingebauten Zustand.

### Detaillierte Beschreibung der Zeichnungen

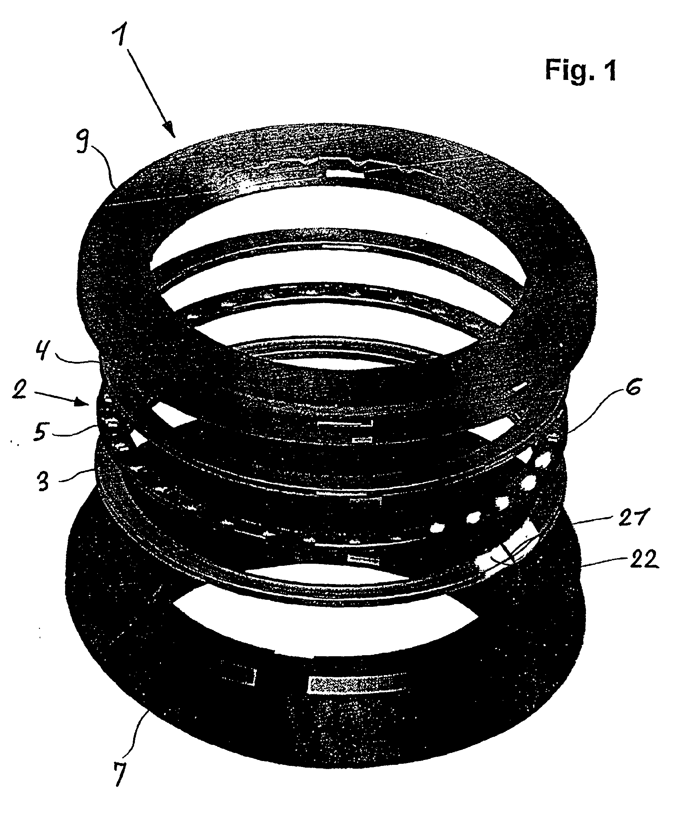

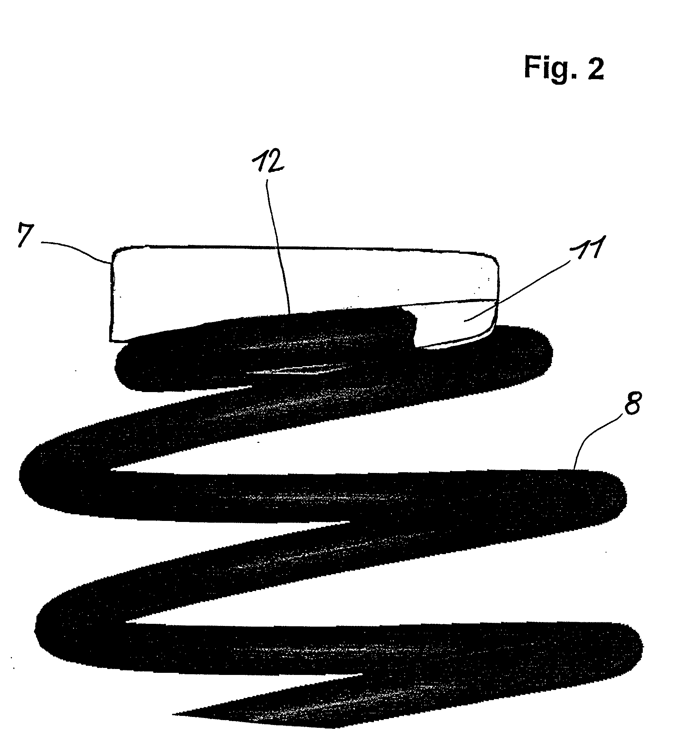

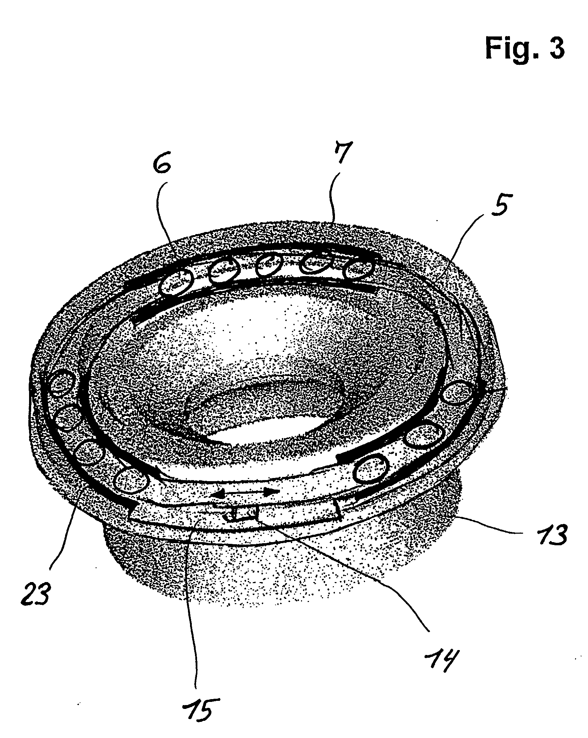

Die Figur 1 zeigt alle Einzelteile einer erfindungsgemäßen Stützlagerung 1. Diese umfasst ein als Axiallager ausgebildetes Wälzlager 2, bestehend aus einem ersten Lagerring 3 und einem zweiten Lagerring 4, zwischen denen in einem Wälzkörperkäfig 5 eingesetzte Wälzkörper 6 geführt sind. Im eingebauten Zustand ist der Lagerring 3 in einem Trägerelement 7 lagefixiert eingesetzt, an dem gegenseitig zum Wälzlager 2 eine in Figur 2 dargestellte Schraubendruckfeder 8 abgestützt ist. Die Schraubendruckfeder 8 bewirkt aufgrund der Formgebung keine einheitliche Krafteinleitung in das Trägerelement 7 und damit in das Wälzlager 2. Insbesondere im Anlagebereich eines Federendes 11 der Schraubendruckfeder 8 entsteht eine Kraftspitze, der eine lastfreie Zone benachbart ist. Aufgrund dieses Kraftprofils sind die Wälzkörper 6 des Wälzlagers 2 unsymmetrisch in dem Wälzlagerkäfig 4 angeordnet, d. h. ausschließlich in den kraftbeaufschlagten Zonen. Diese Maßnahme erfordert einen lageorientierten Einbau des Wälzlagers 2 und einen begrenzt verdrehbaren Wälzkörperkäfig 5, wie in Figur 3 abgebildet ist.

Der Lagerring 4 ist formschlüssig, lagefixiert in dem oberen Trägerelement 9 und der Lagerring 3 entsprechend in dem unteren Trägerelement 7 eingesetzt. Die Lagerringe 3, 4 sind aus einem Draht hergestellt, der zu einem Kreis gebogen ist und der eine Verbindungsstelle 21 aufweist, die in einer lastfreien Zone des Wälzlagers 2 angeordnet ist. Dabei ist die Wälzkörperlaufbahn 22 mittels eines spanlosen Umformverfahrens in die Lagerringe 3, 4 eingeprägt.

Die Figur 2 zeigt den Abstützbereich der Schraubendruckfeder 8 an dem Trägerelement 7. Dazu ist das Trägerelement 7 mit einer an die Windungssteigung des Federendes 11 der Schraubendruckfeder 8 angepasste Abstützfläche 12 versehen. Die Festigkeit des Trägerelementes 7 im Bereich der Abstützfläche 12 ist damit geringer im Vergleich zu anderen Abschnitten des Trägerelementes 7. Diese konstruktive Ausgestaltung des Trägerelementes 7 in Verbindung mit der größten Krafteinleitung durch das Federende 11 im Bereich der Abstützfläche 12 bewirkt eine erhöhte Kraftbeaufschlagung des Wälzlagers 2.

Die Figur 3 zeigt in einer Perspektive das Trägerteil 7, an dem sich die Schraubendruckfeder 8 abstützt und dessen Schaft 13 zur Zentrierung der Schraubendruckfeder 8 dient. In den Wälzkörperkäfig 5 sind umfangsseitig in drei Zonen Wälzkörper 6 in unterschiedlicher Anzahl angeordnet, wobei die Wälzkörperanordnung an die Krafteinleitung angepasst ist. Zur Schaffung eines lageorientierten Einbaus ist der Wälzkörperkäfig 5 mit einem Ansatz 14 versehen, der in eine Aussparung 15 des Trägerelementes 7 eingreift. Ausgehend von der in Figur 3 gezeigten Position des Wälzkörperkäfigs 5 ist dieser in beiden Drehrichtungen, gekennzeichnet durch den Doppelpfeil, bis zu den jeweiligen Endanschlägen der Aussparung 15 verdrehbar. Die Aussparung 15 ist damit angepasst an die maximal auftretende Verdrehung des Trägerelementes 7 gegenüber dem zugehörigen weiteren Trägerelement 9, die beim Einfedern des Fahrzeugs bzw. bei Lenkbewegungen auftreten. Den Wälzkörperanordnungen angepasst, ist das Wälzlager 2 mit segmentartig ausgebildeten Lagerringabschnitten 23 versehen, die in entsprechenden Ausnehmungen des Trägerelementes 7 eingesetzt sind. Abweichend zu dem geschlossen dargestellten Lagerring 3 können ebenfalls Lagerringsegmente in den Trägerelementen 7 und 9 eingesetzt werden, deren Dimensionierung sich ausschließlich auf den Bereich der Wälzkörperanordnung erstreckt.

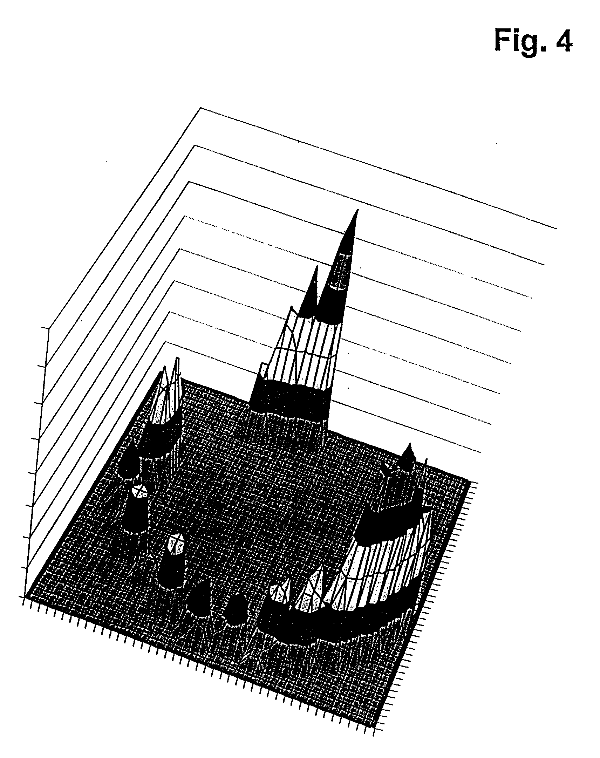

Figur 4 verdeutlicht in einer räumlichen Darstellung die Krafteinleitung der Schraubendruckfeder 8 in die Stützlagerung 1. Das qualitative Kraftprofil zeigt auf den Umfang bezogen zwei voneinander getrennte Zonen mit Kraftspitzen, sowie lastfreie Zonen bzw. Bereiche mit geringen Kraftanteilen. Dieses durch eine Berechnung (FME) bzw. mittels einer Simulation ermittelte Profil ermöglicht eine exakte konstruktive Auslegung des Wälzlagers 2. Im Vergleich zu bisherigen Stützlagerungen sind gemäß der Erfindung die lastfreien Zonen des Wälzlagers 2 ohne Wälzkörper. Diese Maßnahme hat keinen negativen Einfluss auf die Lebensdauer der gesamten Stützlagerung 1.

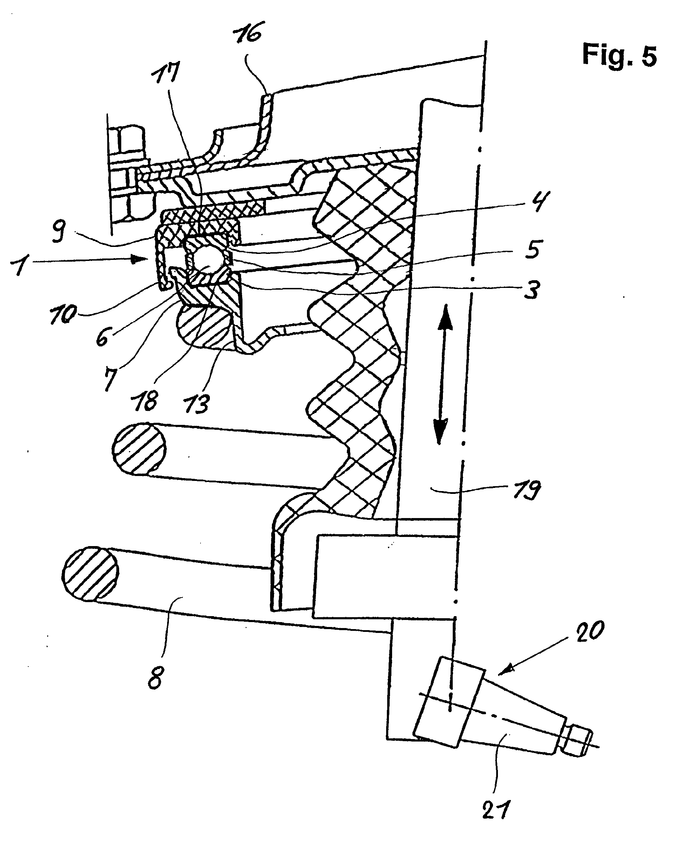

In Figur 5 ist die karosserieseitige Stützlagerung 1 im eingebauten Zustand dargestellt. Das Trägerelement 9 ist dabei mit der Fahrzeugkarosserie 16 verbunden und bildet eine Aufnahme 17, die vorzugsweise als Ringnut gestaltet ist, in der formschlüssig der Lagerring 4 eingesetzt ist. An dem zugehörigen weiteren Trägerelement 7 der Stützlagerung 1 ist die Schraubendruckfeder 8 abgestützt, wobei die Endwindung der Schraubendruckfeder 8 an dem Schaft 13 des Trägerelementes 7 zentriert ist. Der Lagerring 3 ist formschlüssig in die Aufnahme 18 des Trägerelementes 7 eingesetzt. Die Wälzkörper 6 des Wälzlagers 2 sind in dem Wälzlagerkäfig 5 gehalten. Zur Schaffung einer vorkomplettierten Einheit, die alle Bauteile der Stützlagerung 1 umfasst, ist das Trägerelement 9 mit zumindest zwei Schnappverbindungen 10 versehen, die in der Einbaulage beispielsweise eine Außenkontur des Trägerelements 7 hintergreifen und einen sicheren Zusammenhalt aller Bauteile der Stützlagerung 1 sicherstellen. Die Schraubendruckfeder 8 umschließt das Federbein 19, an dessen von der Fahrzeugkarosserie 16 abgewandten Ende sich ein Radträger 20 anschließt, der mit einem Achsschenkel 21 verbunden ist.

### Bezugszahlen

- 1: Stützlager
- 2: Wälzlager
- 3: Lagerring
- 4: Lagerring
- 5: Wälzlagerkäfig
- 6: Wälzkörper
- 7: Trägerelement
- 8: Schraubendruckfeder
- 9: Trägerelement
- 10: Schnappverbindung
- 11: Federende
- 12: Abstützfläche
- 13: Schaft
- 14: Ansatz
- 15: Aussparung
- 16: Fahrzeugkarosserie
- 17: Aufnahme
- 18: Aufnahme
- 19: Federbein
- 20: Radträger
- 21: Verbindungsstelle
- 22: Wälzkörperlaufbahn
- 23: Lagerringabschnitt

## Patentansprüche

1. Karosserieseitige Stützlagerung (1) für ein Federbein (19) eines Kraftfahrzeuges, umfassend zumindest zwei Trägerelemente (7, 9), zwischen denen ein Wälzlager (2) angeordnet ist, dessen Wälzkörper (6) in einem Wälzlagerkäfig (5) eingesetzt sind, wobei das erste Trägerteil (9) mit einer Fahrzeugkarosserie (16) verbunden ist und das zweite Trägerelement (7) einer Schraubendruckfeder (8) zugeordnet ist, die bereichsweise das Federbein (19) umschließt, wobei die Wälzkörper (6) in dem vorzugsweise lageorientiert eingesetzten Wälzlager (2) an eine Krafteinleitung der Schraubendruckfeder (8) in das Wälzlager (2) bzw. in die Stützlagerung (1) in dem Wälzlagerkäfig angeordnete sind.

2. Stützlagerung nach Anspruch 1, wobei die Wälzkörper (6) ausschließlich in kraftbeaufschlagten Zonen des Wälzlagers (2) in dem Wälzlagerkäfig (5) eingesetzt sind.

3. Stützlagerung nach Anspruch 2, wobei der Wälzlagerkäfig (5) gegenüber einem Trägerelement (7, 9) begrenzt verdrehbar angeordnet ist.

4. Stützlagerung nach Anspruch 2, wobei die Wälzkörper (6) in dem Wälzlagerkäfig (5) so angeordnet sind, das diese zumindest mit einer Abstützfläche (12) eines Federendes (11) der Schraubendruckfeder (8) übereinstimmen.

5. Stützlagerung nach Anspruch 2, wobei die Wälzkörper (2) rotationssymmetrisch in dem Wälzlagerkäfig (5) angeordnet sind.

6. Stützlagerung nach Anspruch 2, deren Wälzkörper (2) angepasst an die Krafteinleitung der Schraubendruckfeder (8) in unterschiedlich großen Winkelabständen unsymmetrisch in dem Wälzlagerkäfig (5) eingesetzt sind.

7. Stützlagerung nach Anspruch 1, deren Lagerringe (3, 4) aus einem Draht hergestellt sind, der eine durch ein spanloses Umformen gestaltete Wälzkörperlaufbahn (22) aufweist und deren Enden unlösbar miteinander verbunden sind, wobei eine Verbindungsstelle (21) in einer lastfreien Zone des Wälzlagers (2) angeordnet ist.

8. Stützlagerung nach Anspruch 1, wobei die Wälzkörper (6) an segmentartig gestalteten, in den Trägerelementen (7, 9) eingesetzten, jeweils einen maximalen Stellbereich der Wälzkörper (2) überdeckenden Lagerringabschnitten (23) geführt sind.

9. Stützlagerung nach Anspruch 1, wobei zumindest ein Trägerelement (7) in einer Zone bzw. einem Bereich der größten Krafteinleitung durch die Schraubendruckfeder (8) verstärkt ist.

10. Stützlagerung nach Anspruch 1, wobei das Wälzlager (2) als vorkomplettierbare Einheit in die karosserieseitige Stützlagerung (1) einsetzbar ist.

11. Stützlagerung nach Anspruch 1, deren Trägerelemente (7, 9) so gestaltet sind, dass diese eine Montage von Wälzlagern (2) mit unterschiedlichen Tragzahlen ermöglichen.

12. Stützlagerung nach Anspruch 1, deren Trägerelemente (7, 9) nach Einbau des Wälzlagers (2) miteinander gesichert sind, zur Schaffung einer vorkomplettierten Einheit der gesamten Stützlagerung (1).
